# EUROPÄISCHE PATENTSCHRIFT

(11) **EP 2 859 126 B1**
(45) Veröffentlichungstag und Bekanntmachung des Hinweises auf die Patenterteilung: **07.11.2018**
(21) Anmeldenummer: 13725610.3
(22) Anmeldetag: 22.05.2013
(51) Int. Cl.: C21C 5/52, B66C 13/16, F27D 11/10, H05B 7/10, G01G 3/14, F27D 19/00, F27D 11/00, G01G 19/14

(54) **VERFAHREN UND EINRICHTUNG ZUR BESTIMMUNG DES VERBRAUCHS AN ELEKTRODENMATERIAL BEIM BETRIEB EINES ELEKTROLICHTBOGENOFENS**
METHOD AND DEVICE FOR DETERMINING THE CONSUMPTION OF ELECTRODE MATERIAL DURING THE OPERATION OF AN ELECTRIC ARC FURNACE
PROCÉDÉ ET DISPOSITIF DE DÉTERMINATION DE LA CONSOMMATION DE MATÉRIAU D'ÉLECTRODE LORS DE L'EXPLOITATION D'UN FOUR ÉLECTRIQUE Á ARC

(30) Priorität: 11.06.2012 DE 102012209733
(43) Veröffentlichungstag der Anmeldung: 15.04.2015
(73) Patentinhaber: SHOWA DENKO CARBON Germany GmbH, 86405 Meitingen (DE)
(72) Erfinder: WERNER, Franz-Xaver, 86405 Meitingen (DE); FISCHER, Stefan, 86405 Meitingen (DE); CHRIST, Martin, 86405 Meitingen (DE)
(86) Internationale Anmeldenummer: PCT/EP2013/060519
(87) Internationale Veröffentlichungsnummer: WO 2013/186022

(56) Entgegenhaltungen:
- EP-A1- 0 647 836
- WO-A2-99/50625
- JP-A- H01 230 983
- JP-A- H02 306 137
- JP-A- H09 229 571
- JP-A- 2001 124 478
- US-A- 3 622 678

## Beschreibung

Die vorliegende Erfindung betrifft ein Verfahren und eine Einrichtung zur Bestimmung des Verbrauchs an Elektrodenmaterial bei dem Betrieb eines Elektrolichtbogenofens zur Erzeugung von Stahl.
Elektroöfen und insbesondere Lichtbogenöfen werden unter anderem zum Erhitzen und Aufschmelzen eines Einsatzgutes eingesetzt, welches insbesondere Stahl oder anderen Metalle und verschiedene Zusatzstoffe enthalten kann. Dabei finden Lichtbogenöfen insbesondere bei der Erzeugung und Wiedergewinnung von Stahl oder anderen Metallen durch das Einschmelzen von Altmaterial, insbesondere Altmetallen, wie z.B. Stahlschrott, Anwendung.
In einem Lichtbogenofen wird eine elektrische Spannung zwischen wenigstens einem Elektrodenstrang und dem in dem Lichtbogenofen befindlichen Einsatzgut, welches mit einer Bodenelektrode des Lichtbogenofens in elektrischem Kontakt steht, angelegt. Durch die angelegte elektrische Spannung wird zwischen der dem Einsatzgut zugewandten Spitze des Elektrodenstrangs und dem Einsatzgut ein Lichtbogen erzeugt, wobei die durch den Lichtbogen erzeugte Wärmeenergie, insbesondere durch Wärmestrahlung und Wärmeleitung, auf das Einsatzgut übertragen wird. Auf diese Weise kann das Einsatzgut auf Temperaturen oberhalb seiner Schmelztemperatur, beispielsweise auf Temperaturen im Bereich von ca. 1800 °C, erhitzt und dadurch aufgeschmolzen werden. Zur Entnahme des gewonnenen Schmelzgutes aus dem Elektroofen wird ein Abstich durchgeführt, wonach eine neue Chargierung bzw. Beladung des Elektroofens mit Einsatzgut erfolgt.

Ein Elektrodenstrang ist typischerweise aus mehreren aus einem graphithaltigen Material hergestellten Elektroden zusammengesetzt, welche über an ihren Enden angeordnete Verbindungsstücke, welche als Gewindenippel bezeichnet werden und in entsprechende Vertiefungen an den Elektrodenenden eingeschraubt sind, miteinander verbunden sind. Bei dem Betrieb des Lichtbogenofens sind die Elektroden, an denen der Lichtbogen erzeugt wird, extremen elektrischen sowie thermischen Belastungen ausgesetzt, weswegen diese insbesondere an ihrem unteren, dem Einsatzgut zugewandten Ende einem erheblichen Verschleiß bzw. Abbrand ausgesetzt sind. Aus diesem Grund werden in solchen Öfen üblicherweise nicht einzelne Elektroden eingesetzt, sondern Elektrodenstränge, die an einem Tragarm befestigt sind und während dem Ofenbetrieb in dem Ofen sukzessive nach unten verschoben werden, um die infolge des Elektrodenverschleißes auftretende Verkürzung des Elektrodenstranges auszugleichen und so den Abstand zwischen dem unteren Ende des Elektrodenstrangs und der Oberfläche des Einsatzgutes konstant zu halten. Unter einem Elektrodenstrang wird folglich nicht nur ein aus mehreren Elektroden zusammengesetzter Elektrodenstrang verstanden, sondern auch ein Elektrodenstrang, der bereits so weitgehend verbraucht bzw. abgebrannt ist, dass er nur noch eine teilweise verbrauchte bzw. abgebrannte Elektrode umfasst. Durch die Verwendung solcher Elektrodenstränge kann der Ofen länger ohne Unterbrechung betrieben werden als in dem Fall des Einsatzes einzelner Elektroden. Wenn eine gewisse Mindestlänge des Elektrodenstrangs unterschritten wird, werden an dessen oberen Ende manuell oder bevorzugt maschinell ein oder mehrere neue Elektroden angeschraubt. Dieses Anschrauben kann entweder an den in dem Ofen befindlichen Elektrodenstrang erfolgen; alternativ dazu kann der Elektrodenstrang vorher mittels einer Transportvorrichtung aus dem Ofen entnommen werden und nach dem Anschrauben ein oder mehrerer Elektroden wieder in den Ofen eingeführt werden.

Der Verbrauch an Elektrodenmaterial und folglich an Elektroden in dem Elektroofen trägt in nicht unerheblichem Ausmaß zu den Betriebskosten des Elektroofens bei und kann beispielsweise etwa 5 % der Betriebskosten ausmachen. Dementsprechend stellt der auf die Menge an gewonnenem Schmelzgut bezogene spezifische Verbrauch an Elektrodenmaterial, d.h. zum Beispiel das Verhältnis von verbrauchtem Elektrodenmaterial zu wiedergewonnenem Stahl, eine wichtige Betriebsgröße dar. Dabei hängt der spezifische Verbrauch an Elektrodenmaterial von unterschiedlichen Einflussgrößen ab, wie beispielsweise von dem verwendeten Elektrodenmaterial, von dem elektrischen Betriebsstrom und von der Zusammensetzung und Qualität des Einsatzgutes.

Um beispielsweise die Auswirkung verschiedener Betriebsweisen des Elektroofens und/oder verschiedener Betriebsparameter des Schmelzprozesses auf den spezifischen Verbrauch an Elektrodenmaterial des Elektroofens einschätzen und so den Betrieb des Elektroofens optimieren zu können, ist es erforderlich, den Verbrauch an Elektrodenmaterial des Elektroofens zu bestimmen. Dabei ist es insbesondere vorteilhaft, den Elektrodenmaterialverbrauch für verschiedene Betriebsintervalle des Elektroofens separat zu ermitteln, um den spezifischen Elektrodenverbrauch in Abhängigkeit von den verschiedenen während der einzelnen Betriebsintervalle herrschenden Betriebsbedingungen differenziert analysieren zu können.

Zu diesem Zweck ist es bekannt, für einen bestimmten Zeitraum, wie beispielsweise einen Monat, die Anzahl an aus einem Lager entnommenen und dem Elektrodenstrang hinzugefügten Elektroden zu ermitteln und daraus das vorgenannte Verhältnis von verbrauchtem Elektrodenmaterial zu wiedergewonnenem Stahl zu berechnen. Auf diese Weise lassen sich aber keine ausreichend genauen Werte für kürzere Zeiträume, wie beispielsweise wenige oder gar eine Woche, wenige Tage oder Stunden und insbesondere für einen Zeitraum zwischen zwei aufeinander folgenden Abstichen, ermitteln, da die Menge des zu Anfang und zu Ende des betrachteten Zeitintervalls jeweils noch in dem Elektrodenstrang enthaltenen Elektrodenmaterials unberücksichtigt bleibt.

Ferner können für diesen Zweck Kamerasysteme eingesetzt werden, um vor und nach einem Betriebsintervall des Elektroofens jeweils ein Bild des Elektrodenstrangs aufnehmen, um die während des Betriebsintervalls aufgetretene Abbrandrate des Elektrodenstrangs zu erfassen und daraus den Verbrauch an Elektrodenmaterial während des Betriebsintervalls abzuschätzen. Allerdings ist ein erheblicher materieller und personeller Aufwand notwendig, um diese Bilder aufzunehmen und entsprechend auszuwerten. Zudem kann die Aufnahme der Bilder nur bei geöffnetem Deckel des Elektroofens und somit nur zu besonderen Zeitpunkten währen des Betriebs des Elektroofens erfolgen, so dass dieses Verfahren hinsichtlich seiner Flexibilität in Bezug auf die möglichen Zeitintervalle der Verbrauchserfassung eingeschränkt ist. Ferner wird auch mit diesem Verfahren keine hinreichend exakte Abschätzung des Elektrodenverbrauchs erhalten [Elektrostahl-Erzeugung (1997); Karl H Heinen (Herausgeber); Verlag Stahleisen GmbH].

Ein Verfahren zur Bestimmung des Verbrauchs an Elektrodenmaterial beim Betrieb eines Elektroofens zur Erzeugung von Stahl ist beschrieben [JP H02 306137A (DAIDO STEEL CO LTD) 19. Dezember 1990], wobei das Gewicht wenigstens eines in dem Elektroofen angeordneten oder in diesen einzuführenden Elektrodenstrang mit wenigstens einer Elektrode bestimmt wird. Die Wiegeeinrichtung ist jedoch nicht so ausgestaltet, dass diese das Gewicht von wenigstens einem Elektrodenstrang kontinuierlich oder zumindest quasikontinuierlich mit einer zeitlichen Auflösung von 1 bis 500 Hz bestimmen kann.

Eine Einrichtung zur Bestimmung des Verbrauchs an Elektrodenmaterial eines Elektroofens ist bekannt [JP H01 230983 A (NIPPON STEEL CORP) 14. September 1989]. Es werden Elektroden gezeigt, die in einer Twin-Konfiguration betrieben werden. Eine solche Konstruktion kann in Stahlwerken verwendet werden, allerdings kann die Wiegeeinrichtung das Gewicht von wenigstens einem Elektrodenstrang nicht kontinuierlich oder zumindest quasikontinuierlich mit einer zeitlichen Auflösung von 1 bis 500 Hz bestimmen.

Eine Einrichtung zur Bestimmung des Verbrauchs an Elektrodenmaterial eines Lichtbogenofens ist beschrieben [JP H09 229571 A (DAIDO STEEL CO LTD) 5. September 1997]. Bei der Wiegeeinrichtung kann das Gewicht von wenigstens einem Elektrodenstrang nicht kontinuierlich oder zumindest quasikontinuierlich mit einer zeitlichen Auflösung von 1 bis 500 Hz bestimmt werden.

Eine Einrichtung zur Bestimmung des Verbrauchs an Elektrodenmaterial eines Ofens zur Veredlung von Elektroschlacke ist beschrieben [US 3 622 678 A (ALLEN ALEC GEORGE) 23. November 1971]. Die Einrichtung umfasst wenigstens eine Wiegeeinrichtung zum Bestimmen des Gewichts wenigstens eines in dem Elektroofen angeordneten oder in diesen einzuführenden Elektrodenstrang. Diese Wiegeeinrichtung ist in einer den Elektroofen umfassenden Anlage integriert. Nicht beschrieben ist eine Ausgestaltung der Wiegeeinrichtung zur kontinuierlichen oder zumindest quasikontinuierlichen Bestimmung des Gewichts von wenigstens einem Elektrodenstrang mit einer zeitlichen Auflösung von 1 bis 500 Hz. Auch ist eine Stahlerzeugung nicht möglich, da selbstverzehrende Elektroden verwendet werden, die zur Veredlung von Elektroschlacke eingesetzt werden.

Ein Verfahren zur Bestimmung des Verbrauchs an Elektrodenmaterial beim Betrieb eines Elektroschmelzofens ist beschrieben [WO 99/50625 A2 (ELKEM MATERIALS, NO; BRUSTAD GEORG, NO; HAUGEN FRODE, NO; TVEIT HAL) 7. Oktober 1999]. Das Verfahren umfasst, dass das Gewicht wenigstens eines in dem Elektroschmelzofen angeordneten oder in diesen einzuführenden Elektrodenstrang mit wenigstens einer Wiegeeinrichtung bestimmt wird. Die Wiegeeinrichtung ist jedoch nicht so ausgestaltet, dass diese das Gewicht von wenigstens einem Elektrodenstrang kontinuierlich oder zumindest quasikontinuierlich mit einer zeitlichen Auflösung von 1 bis 500 Hz bestimmen kann. Der Elektroschmelzofen ist zudem nicht für die Herstellung von Stahl geeignet, da die genannte Söderberg Elektrode für elektrochemisches Schmelzen von Silicium verwendet wird und damit für die Herstellung von Stahl ungeeignet ist.
Die Bestimmung des Gewichts einer Last durch wenigstens eine Wiegeeinrichtung einer Transporteinrichtung ist beschrieben [EP 0 647 836 A1 (ABUS KRANSYSTEME GMBH & CO KG, DE) 12. April 1995]. Nicht beschrieben ist eine Ausgestaltung der Wiegeeinrichtung zur kontinuierlichen oder zumindest quasikontinuierlichen Bestimmung des Gewichts von wenigstens einem Elektrodenstrang mit einer zeitlichen Auflösung von 1 bis 500 Hz.
Aufgabe der vorliegenden Erfindung ist es daher, ein Verfahren und eine Einrichtung zu schaffen, die eine exakte und zuverlässige Bestimmung des Verbrauchs an Elektrodenmaterial bei dem Betrieb eines Elektrolichtbogenofens während eines beliebigen Zeitintervalls, insbesondere kurzen Betriebsintervalls, wie dem zwischen einem Abstich und dem nächsten, ermöglichen und zudem mit einem geringen materiellen und insbesondere mit einem geringen personellen Aufwand realisierbar sind. Ein geringer materieller Aufwand sollte sich auch in einer doppelten Funktion der Wiegeeinrichtung niederschlagen.
Erfindungsgemäß wird diese Aufgabe gelöst durch ein Verfahren zur Bestimmung des Verbrauchs an Elektrodenmaterial bei dem Betrieb eines Elektrolichtbogenofens zur Erzeugung von Stahl, wobei das Verfahren umfasst, dass das Gewicht wenigstens eines in dem Elektroofen angeordneten oder in diesen einzuführenden Elektrodenstrang mit einer Wiegeeinrichtung kontinuierlich oder zumindest quasikontinuierlich bestimmt wird.

Indem erfindungsgemäß das Gewicht eines in dem Elektrolichtbogenofen angeordneten oder darin einzuführenden Elektrodenstrangs mit einer Wiegeeinrichtung bestimmt wird, wird zuverlässig und unmittelbar der exakte Wert der zu diesem Zeitpunkt in dem Elektroofen zum Einsatz gelangenden Menge an Elektrodenmaterial ermittelt. Diese Bestimmung wird erfindungsgemäß an mindestens zwei verschiedenen Zeitpunkten durchgeführt, wodurch unmittelbar ermittelt wird, wie viel Elektrodenmaterial sich zu Beginn und am Ende dieses durch die Zeitpunkte definierten Zeitintervalls in dem Elektroofen befunden hat. Durch die Differenz der auf diese Weise ermittelten Gewichtswerte kann der exakte Wert des in dem entsprechenden Zeitintervall, beispielsweise zwischen zwei aufeinander folgenden Abstichen des Elektroofens, verbrauchten Elektrodenmaterials bestimmt werden. Auf diese Weise ist eine einfache, exakte und zuverlässige Bestimmung des Verbrauchs an Elektrodenmaterial während eines beliebig kurz wählbaren Betriebsintervalls des Elektrolichtbogenofens möglich.

Um den Zeit- und Personalaufwand zur Bestimmung des Verbrauchs an Elektrodenmaterial zu minimieren und möglichst ganz zu vermeiden, wird das Gewicht des wenigstens eines Elektrodenstranges in dem erfindungsgemäßen Verfahren vorzugsweise automatisch bestimmt. Beispielsweise kann die Wiegeeinrichtung durch eine automatische Steuerung angesteuert werden, um zu vorgegebenen Zeitpunkten einen Messwert für das Gewicht des Elektrodenstrangs zu ermitteln.

Um den in einem bestimmten Zeit- oder Betriebsintervall des Elektrolichtbogenofens aufgetretenen Verbrauch an Elektrodenmaterial zu bestimmen, wird es in Weiterbildung des Erfindungsgedankens vorgeschlagen, das Gewicht des wenigstens eines Elektrodenstranges zu wenigstens zwei verschiedenen Zeitpunkten zu bestimmen. Der Verbrauch an Elektrodenmaterial während des durch die beiden Zeitpunkte definierten Zeitintervalls lässt sich dann durch Bilden der Differenz der beiden Gewichtswerte bestimmen. Insbesondere kann das Gewicht des wenigstens eines Elektrodenstranges unmittelbar vor und nach einem zusammenhängenden Schmelzbetriebsintervall des Elektroofens bestimmt werden, d.h. vor und nach einem zusammenhängenden Zeitintervall, während dem der Elektrodenstrang zum Erhitzen bzw. Aufschmelzen des Einsatzgutes des Elektrolichtbogenofens ununterbrochen bestromt wird. Natürlich kann das Elektrodenstranggewicht ebenso vor und nach einem längeren Zeitintervall bestimmt werden, das mehrere in zeitlichem Abstand voneinander durchgeführte Schmelzbetriebsintervalle des Elektrolichtbogenofens einschließt.
Da das Verfahren besonders vorteilhaft dazu dienen kann, den Einfluss verschiedener Betriebsbedingungen auf den Elektrodenmaterialverbrauch zu analysieren, wird der Verbrauch an Elektrodenmaterial vorzugsweise für verschiedene Schmelzbetriebsintervalle ermittelt, wobei während den einzelnen Schmelzbetriebsintervallen verschiedene Betriebsbedingungen vorliegen, wie beispielsweise verschieden hohe Stromdichten eingestellt oder verschiedene Stahlsorten eingesetzt sind, wobei die Verbrauchswerte für jedes Intervall durch Bestimmen und Differenzbildung der Elektrodenstranggewichte unmittelbar vor und nach dem jeweiligen Schmelzbetriebsintervall bestimmt werden.
Beispielsweise kann das Elektrodenstranggewicht unmittelbar vor und nach einem Abstich-zu-Abstich-Zeitintervall des Elektrolichtbogenofens ermittelt werden, d.h. unmittelbar vor und nach einem Zeitintervall des Schmelzbetriebs, welches unmittelbar auf einen Abstich des Elektrolichtbogenofens folgt und welches sich bis zu dem nächsten Abstich des Elektrolichtbogenofens erstreckt.

Bei dem Betrieb des Elektrolichtbogenofens werden üblicherweise in regelmäßigen Abständen neue Elektroden zu dem Elektrodenstrang hinzugefügt und mit diesem verbunden, insbesondere an diesen angeschraubt, um den durch den bei dem Ofenbetrieb stattfindenden Abbrand des Elektrodenstrangs hervorgerufenen Verbrauch an Elektrodenmaterial auszugleichen. Dieses Hinzufügen von neuen Elektroden findet vorzugsweise zwischen zwei aufeinander folgenden Schmelzbetriebsintervallen des Elektrolichtbogenofens und folglich an einem unbestromten Elektrodenstrang statt. Im Falle der Hinzufügung einer Elektrode zu dem Elektrodenstrang kann das Gewicht des Elektrodenstrangs unmittelbar vor dem Hinzufügen der neuen Elektrode bestimmt werden, insbesondere um daraus den Verbrauch an Elektrodenmaterial während des vor dem Hinzufügen der Elektrode durchgeführten Schmelzbetriebsintervalls ermitteln zu können. Alternativ dazu oder auch bevorzugt zusätzlich dazu kann das Gewicht des Elektrodenstrangs unmittelbar nach dem Hinzufügen der neuen Elektrode bestimmt werden, und zwar insbesondere als Ausgangswert für die Berechnung des Verbrauchs an Elektrodenmaterial während des auf das Hinzufügen der Elektrode folgenden Schmelzbetriebsintervalls. Bevorzugt werden beide der obigen Gewichte ermittelt. Gleichermaßen kann auch nur das Gewicht des Elektrodenstrangs unmittelbar vor dem Hinzufügen der neuen Elektrode bestimmt werden und daraus durch Addieren des Gewichts der zugefügten Elektrode das Gewicht des Elektrodenstrangs unmittelbar nach dem Hinzufügen der neuen Elektrode errechnet werden.

Wenn das exakte Gewicht einer zu dem Elektrodenstrang hinzuzufügenden Elektrode bekannt ist, kann das bekannte Gewicht der hinzuzufügenden Elektrode auch dazu verwendet werden, die Wiegeeinrichtung zu kalibrieren. Zu diesem Zweck kann beispielsweise das Gewicht der hinzuzufügenden Elektrode mit der Wiegeeinrichtung gemessen und der gemessene Wert mit dem bekannten tatsächlichen Gewicht der hinzuzufügenden Elektrode verglichen werden und die Wiegeeinrichtung so abhängig von dem Ergebnis des Vergleichs kalibriert werden. Bevorzugt erfolgt die Messung des Gewichts der hinzuzufügenden Elektrode, während die Elektrode zu dem Elektrodenstrang transportiert wird, um dem Elektrodenstrang hinzugefügt zu werden, oder unmittelbar bevor die Elektrode dem Elektrodenstrang hinzugefügt wird. Ferner kann es gemäß einer vorteilhaften Ausführungsform der vorliegenden Erfindung vorgesehen sein, bei jedem Hinzufügen einer neuen Elektrode zu dem Elektrodenstrang eine Messung des Gewichts der hinzuzufügenden oder hinzugefügten Elektrode und eine entsprechende Kalibrierung der Wiegeeinrichtung durchzuführen.

Gemäß einer weiteren bevorzugten Ausführungsform der vorliegenden Erfindung ist es bevorzugt, das wie zuvor beschrieben bestimmte Gewicht des Elektrodenstrangs automatisch aufzuzeichnen, und zwar beispielsweise unter Verwendung einer entsprechenden elektronischen Speichereinrichtung. Auf diese Weise kann eine umfassende Datenbasis für verschiedene den Verbrauch an Elektrodenmaterial des Elektrolichtbogenofens betreffende Auswertungen erzeugt werden. Im Rahmen der vorliegenden Erfindung ist es zudem bevorzugt, auch die Menge des in dem Elektrolichtbogenofen zu dem betrachteten Zeitpunkt bzw. während dem bzw. den betrachteten Zeitintervallen gewonnenen Schmelzguts zu erfassen, um aus dem Quotient aus Verbrauch an Elektrodenmaterial und dem gewonnenen Schmelzgut den spezifischen Verbrauch an Elektrodenmaterial des Elektrolichtbogenofens bestimmen zu können.
Vorzugsweise erfolgt bei dem erfindungsgemäßen Verfahren die Bestimmung des Gewichts durch eine in einer Betriebseinrichtung einer den Elektrolichtbogenofens umfassenden Anlage integrierte Wiegeeinrichtung. Integriert bedeutet in diesem Zusammenhang, dass zumindest ein Bauteil und bevorzugt alle Bauteile der Wiegeeinrichtung eine bauliche und/oder funktionelle Einheit mit zumindest einem Element der Betriebseinrichtung bilden.
Gemäß einer weiteren vorteilhaften Ausführungsform der vorliegenden Erfindung ist die wenigstens eine Wiegeeinrichtung zur Bestimmung des Gewichts des wenigstens einen Elektrodenstrangs in einer Transporteinrichtung integriert, mit welcher der in dem Elektrolichtbogenofen angeordnete und vorzugsweise in dem Elektrolichtbogenofen durch eine Halteeinrichtung gehaltene Elektrodenstrang aufgenommen und in dem Elektrolichtbogenofen transportiert und/oder aus dem Elektrolichtbogenofen heraustransportiert wird, und/oder mit welcher ein außerhalb des Elektrolichtbogenofens angeordneter Elektrodenstrang in den Elektrolichtbogenofen transportiert wird. Bei der Halteeinrichtung handelt es sich beispielsweise um eine Halteeinrichtung, durch welche der Elektrodenstrang während des Schmelzbetriebs des Elektrolichtbogenofens in dem Elektrolichtbogenofen in Position gehalten und in Abhängigkeit von dem Ausmaß des Elektrodenabbrandes sukzessive nach unten verschoben wird, um die infolge des Elektrodenabbrandes auftretende Verkürzung des Elektrodenstranges auszugleichen und so den Abstand zwischen dem unteren Ende des Elektrodenstrangs und der Oberfläche des Einsatzgutes konstant zu halten. Das Gewicht des Elektrodenstrangs kann bei dieser Ausführungsform bestimmt werden, ohne den Elektrodenstrang vollständig aus dem Elektrolichtbogenofen und/oder von der Halteeinrichtung entfernen zu müssen. Beispielsweise kann die Transporteinrichtung dazu verwendet werden, um den Elektrodenstrang zwischen zwei Schmelzbetriebsintervallen relativ zu dem Elektrolichtbogenofen bzw. relativ zu der Halteeinrichtung anzuheben und/oder abzusenken, beispielsweise um den Abstand des Elektrodenstrangs von dem Einsatzgut des Ofens einzustellen, insbesondere nachdem eine neue Elektrode zu dem Elektrodenstrang hinzugefügt wurde. Um den Elektrodenstrang aufnehmen zu können, weist die Transportvorrichtung vorzugsweise eine Kopplungsvorrichtung zur Kopplung mit dem Elektrodenstrang auf. Ferner kann die Halteeinrichtung eine Verstelleinrichtung enthalten, mit der die Halteeinrichtung und insbesondere auch ein von der Halteeinrichtung gehaltener Elektrodenstrang in ihrer bzw. seiner Position verstellbar und insbesondere höhenverstellbar ist. Zu diesem Zweck kann die Verstelleinrichtung beispielsweise ein Hydrauliksystem umfassen. Bei dieser Ausführungsform kann die Wiegeeinrichtung in einer solchen Verstelleinrichtung der Halteeinrichtung integriert sein.
Dabei kann die Transporteinrichtung insbesondere auch dazu verwendet werden, dem Elektrodenstrang eine neue Elektrode hinzuzufügen und damit zu verbinden. Dabei kann die hinzuzufügende Elektrode mit der Transporteinrichtung aus einer Lagerposition in eine Position direkt senkrecht über dem ggf. von der Halteeinrichtung gehaltenen Elektrodenstrang transportiert werden, wobei die Transporteinrichtung eine Positioniereinheit, wie beispielsweise eine Lasereinheit, aufweisen kann, mit der die genaue gegenseitige Ausrichtung und/oder Positionierung der neuen Elektrode und des Elektrodenstrangs überprüft werden kann. Die in die korrekte Position gebrachte Elektrode kann z.B. durch Verschrauben eines in der Elektrode vorgesehenen Nippels mit dem Elektrodenstrang verbunden werden. Nachdem dem Elektrodenstrang eine oder mehrere neue Elektroden hinzugefügt wurden, kann der Elektrodenstrang von der Halteeinrichtung gelöst und durch die Transporteinrichtung in Richtung des Elektrolichtbogenofens ein Stück weit abgesenkt werden, um den gewünschten Abstand zwischen Elektrodenstrangspitze und Einsatzgut des Elektrolichtbogenofens herzustellen, bevor der Elektrodenstrang wieder durch die Halteeinrichtung fixiert und in Position gehalten wird. Alternativ dazu kann die Transporteinrichtung den Elektrodenstrang auch von der Halteeinrichtung zu einer anderen Position in dem Elektrolichtbogenofen oder außerhalb des Elektrolichtbogenofens bewegen, um dort eine oder mehrere neue Elektroden an den Elektrodenstrang zu befestigen, bevor der so ergänzte Elektrodenstrang wieder zu der Halteeinrichtung geführt, dort fixiert und in Position gehalten wird.
Bei der Transporteinrichtung handelt es sich beispielsweise um eine Kraneinrichtung, die z.B. eine Laufkatze umfasst, die vorzugsweise auf einer senkrecht oberhalb des Elektrolichtbogenofens und/oder der Halteeinrichtung verlaufenden bevorzugt horizontalen Kranbahn bewegt wird. Die Kraneinrichtung kann als Kopplungsvorrichtung z.B. einen an einem Seil der Kraneinrichtung angeordneten Kranhaken umfassen, an dem der Elektrodenstrang angehängt werden kann. Die Wiegeeinrichtung kann bei dieser Ausführungsform zum Beispiel eine zwischen dem Kranhaken und der Kranbahn der Kraneinrichtung hängende Kranwaage umfassen.
Gemäß einer weiteren vorteilhaften Ausführungsform der vorliegenden Erfindung ist die Wiegeeinrichtung in einer Halteeinrichtung integriert, durch welche der Elektrodenstrang während des Schmelzbetriebs des Elektrolichtbogenofens gehalten wird. Da der Elektrodenstrang typischerweise während des überwiegenden Teils der Betriebszeit des Elektrolichtbogenofens von der Halteeinrichtung gehalten wird, bietet die in die Halteeinrichtung integrierte Wiegeeinrichtung die Möglichkeit, das Gewicht des Elektrodenstrangs zu annähernd beliebigen Zeitpunkten und folglich zumindest annähernd kontinuierlich zu bestimmen, ohne dass dazu der Betriebsablauf des Elektrolichtbogenofens verändert werden müsste oder zusätzliche Elektrodenstrangbewegungen durchgeführt werden müssen. Insbesondere bei dieser Ausführungsform kann die Wiegeeinrichtung zusätzlich auch dazu ausgebildet sein und verwendet werden, während des Schmelzbetriebs des Elektrolichtbogenofens auftretende Schwingungen, wie sie insbesondere in dem Elektrodenstrang infolge der der Erzeugung der Lichtbögen durch den Elektrodenstrang auftreten können, zu erfassen, zu messen und gegebenenfalls aufzuzeichnen, so dass die Wiegeeinrichtung eine doppelte Funktion erfüllt.
Zur Erfassung des Schwingungszustandes kann beispielsweise das Gewicht des Elektrodenstrangs während des Betriebs des Elektrolichtbogenofens durch die Wiegeeinrichtung bestimmt werden. Während des Betriebs des Elektrolichtbogenofens wirken beispielsweise infolge der Erzeugung der Lichtbögen auf den Elektrodenstrang zusätzlich zu der Gewichtskraft Kräfte ein, welche eine schwingende Bewegung des Elektrodenstrangs hervorrufen können. Hierzu wird das Gewicht des Elektrödenstrangs während des Betriebs des Elektrolichtbogenofens durch die Wiegeeinrichtung kontinuierlich oder zumindest quasikontinuierlich, mit einer zeitlichen Auflösung von 1 bis 500 Hz, bestimmt. Durch die Auswertung der während des Betriebs des Elektroofens durch die Wiegeeinrichtung bestimmten Werte lässt sich ein solcher Schwingungszustand des Elektrodenstrangs erkennen, wobei bei dieser Ausführuhgsform insbesondere auch die Frequenz und/oder Amplitude der Schwingung bestimmt werden kann. Dadurch können insbesondere für die Elektrode gefährliche Beschleunigungen bzw. Schwingungsfrequenzen erkannt werden und die Steuerung des Ofens und/oder einer Aufhängung der Elektrode können in Abhängigkeit von dieser Erkennung angepasst werden, wobei insbesondere eine automatische Notabschaltung durchgeführt werden kann, bevor ein kritischer Zustand eintritt. Zudem kann die Erfassung bzw. Messung des Schwingungszustands des Elektrodenstrangs beispielsweise auch zur Beurteilung des Betriebszustands des Elektrolichtbogenofens verwendet werden. Zum Beispiel können mit der Erfassung des Schwingungszustands Schrotteinbrüche detektiert, unkontrollierte Überschläge bzw. Lichtbögen von dem Elektrodehstrang auf die Wand des Elektrolichtbogenofens erkannt oder die Gefahr von Elektrodenbrüchen vorhergesagt und Elektrodenbrüche vermieden werden. Gemäß einer weiteren Ausführungsform kann es vorgesehen sein, dass aus dem erfassten Schwingungszustand des Elektrodenstrangs die Höhe von Schaumschlacke des Elektrolichtbogenofens abgeleitet wird. Die wie vorstehend beschrieben erfassten Informationen können auch dazu verwendet werden, den Betrieb des Elektrolichtbogenofens anzupassen und zu optimieren. Insbesondere können eine deutlich verminderte Wärmeabstrahlung und somit ein effizienterer Betrieb des Elektrolichtbogenofens erreicht werden und/oder es kann eine reduzierte Schwingung des Elektrodenstrangs bzw. eine ruhigere Fahrweise des Elektrolichtbogenofens erreicht werden.
Eine wie zuvor beschriebene Halteeinrichtung für den Elektrodenstrang kann einen Tragarm umfassen, der oberhalb des Ofens in horizontaler Richtung verläuft und an seinem ofenseitigen Ende eine Aufnahme bzw. Halterung für den Elektrodenstrang aufweist. Diese Halterung kann wenigstens zwei einander gegenüber liegende Klemmbacken aufweisen, durch die der Elektrodenstrang an dem Tragarm angeklemmt werden kann. Ausgehend von dem Tragarm erstreckt sich der Elektrodenstrang vorzugsweise durch eine Öffnung des Ofendeckels hindurch in vertikaler Richtung in den Elektrolichtbogenofen hinein. Daneben kann die Halteeinrichtung eine im Wesentlichen vertikale Säule umfassen, an deren oberem Ende sich der Tragarm anschließt. Die Halteeinrichtung kann in vertikaler Richtung höhenverstellbar ausgebildet sein, um die Höhe des Elektrodenstrangs so einstellen zu können, dass trotz der durch den Abbrand des Elektrodenstrangs variierenden Elektrodenstranglänge ein gewünschter Abstand zwischen der Elektrodenstrangspitze und dem Einsatzgut des Elektrolichtbogenofens erhalten wird. Die Halteeinrichtung und insbesondere ein Tragarm der Halteeinrichtung dient vorzugsweise außerdem dazu, den Elektrodenstrang während des Schmelzbetriebes des Elektrolichtbogenofens mit Strom zu versorgen und ist dazu bevorzugt über Kabel mit einer elektrischen Leistungsquelle verbunden.
In Weiterbildung des Erfindungsgedankens wird es vorgeschlagen, das Gewicht des Elektrodenstrangs unter Verwendung wenigstens eines Elements zu bestimmen, welches bevorzugt ein Dehnungsmesstreifen, ein Kraftaufnehmer und/oder ein in einem Hydrauliksystem zur Verstellung der Halteeinrichtung für den Elektrodenstrang angeordnetes Druckmesselement ist. Der wenigstens eine Dehnungsmessstreifen kann dabei z.B. ein metallischer Dehnungsmessstreifen oder ein optischer Dehnungsmessstreifen sein und/oder der wenigstens eine Kraftaufnehmer kann eine Wägezelle sein. Ein an einem Tragarm einer Halteeinrichtung für den Elektrodenstrang angeordneter Dehnungsmessstreifen misst die in dem Tragarm durch das Gewicht des Elektrodenstrangs erzeugte Dehnung bzw. Zugspannung, woraus sich das Gewicht des Elektrodenstrangs bestimmen lässt. Prinzipiell kann der Dehnungsmesstreifen auch an einer vorzugsweise vertikalen Säule der Halteeinrichtung, die den Tragarm trägt, oder zwischen der Säule und dem Tragarm angeordnet sein. Vorzugsweise wird der Dehnungsmessstreifen jedoch im Bereich der größten Dehnung des Tragarms angebracht, und zwar insbesondere auf der Oberseite des Tragarms, in der Nähe der den Tragarm tragenden Säule und/oder in etwa in der in Breitenrichtung des Tragarms betrachteten Mitte des Tragarms, wobei der Dehnungsmessstreifen aber auch außerhalb dieser Mitte angeordnet sein kann. Zudem kann ein vorstehend genanntes Hydrauliksystem dazu ausgebildet sein, die Halteeinrichtung und einen in der Halteeinrichtung aufgenommenen Elektrodenstrang in seiner Position zu verstellen, und zwar insbesondere in Bezug auf die Höhe. Ein in dem Hydrauliksystem angeordnetes Druckmesselement, welches den Druck der Hydraulikflüssigkeit des Hydrauliksystems misst, ist besonders dazu geeignet, das Gewicht eines von der Halteeinrichtung gehaltenen Elektrodenstrangs zu bestimmen. Prinzipiell kann die Wiegeeinrichtung in einer beliebigen, zur Durchführung einer wie vorstehend beschriebenen Verstellung ausgebildeten Verstelleinrichtung der Halteeinrichtung integriert sein.
Ein Kraftaufnehmer, insbesondere eine Wägezelle, eignet sich ebenfalls zum Bestimmen des Gewichts des Elektrodenstrangs und kann beispielsweise an dem Tragarm und/oder der Säule der Halteeinrichtung angebracht sein, wobei die Wägezelle bevorzugt sowohl mit dem Tragarm als auch mit der Säule der Halteeinrichtung messwirksam verbunden ist. Prinzipiell kann die Wiegeeinrichtung auch mehrere Dehnungsmesstreifen und/oder mehrere Kraftaufnehmer umfassen, wobei die mehreren Dehnungsmessstreifen und/oder Kraftaufnehmer entweder voneinander unabhängige Messungen des Gewichts bzw. der Dehnung durchführen oder zur Erzeugung eines gemeinsamen Messwerts geeignet miteinander verschaltet sein können.
Ein weiterer Vorteil der vorstehenden Ausführungsform ist es, dass ein Dehnungsmessstreifen und ein Kraftaufnehmer außerdem jeweils dazu geeignet sind, während des Schmelzbetriebs des Elektrolichtbogenofens in dem Elektrodenstrang oder damit verbundenen Bauteilen auftretende Schwingungen zu erfassen, zu messen und gegebenenfalls aufzuzeichnen.
Bevorzugt wird vor der Bestimmung des Gewichts des Elektrodenstrangs durch die Wiegeeinrichtung eine Kalibrierung der Wiegeeinrichtung durchgeführt. Gemäß einer vorteilhaften Ausführungsform wird das Gewicht des Elektrodenstrangs zu einem Zeitpunkt bestimmt, zu dem der Elektrodenstrang nicht bestromt wird. Da zu diesem Zeitpunkt keine durch Lichtbögen erzeugte Schwingungen in dem Elektrodenstrang auftreten, ist auf diese Weise eine besonders genaue Messung des Gewichts des Elektrodenstrangs möglich.

Im Rahmen der vorliegenden Erfindung wird das Gewicht des Elektrodenstrangs vorzugsweise bestimmt, während sich der Elektrodenstrang zumindest abschnittsweise in dem Elektrolichtbogenofen befindet und/oder von einer Halteeinrichtung für den Elektrodenstrang gehalten wird. Somit kann darauf verzichtet werden, den Elektrodenstrang eigens zum Zweck der Gewichtsbestimmung aus dem Elektrolichtbogenofen und/oder der Halteeinrichtung zu entfernen, wodurch ein zusätzlicher Zeitaufwand für die Bestimmung des Verbrauchs an Elektrodenmaterial vermieden wird.
Ein weiterer Gegenstand der Erfindung ist eine Einrichtung zur Bestimmung des Verbrauchs an Elektrodenmaterial eines Elektrolichtbogenofens zur Erzeugung von Stahl, wobei die Einrichtung wenigstens eine Wiegeeinrichtung zum Bestimmen des Gewichts wenigstens eines in dem Elektrolichtbogenofen angeordneten oder in diesen einzuführenden Elektrodenstrangs umfasst, wobei die Wiegeeinrichtung in einer Betriebseinrichtung einer den Elektroofen umfassenden Anlage integriert ist. Eine solche Einrichtung ist mit geringem Aufwand realisierbar und eignet sich insbesondere zur Durchführung des vorstehend beschriebenen erfindungsgemäßen Verfahrens. Die vorstehend in Bezug auf das Verfahren zur Bestimmung des Verbrauchs an Elektrodenmaterial beschriebenen Vorteile und vorteilhaften Ausführungsformen gelten entsprechend für die Einrichtung zur Bestimmung des Verbrauchs an Elektrodenmaterial. Die Bestimmung des Gewichts wird zu wenigstens zwei verschiedenen Zeitpunkten durchgeführt:
Gemäß einer vorteilhaften Ausführungsform der Erfindung ist die Einrichtung dazu ausgebildet, das Gewicht des Elektrodenstrangs automatisch zu bestimmen. Dazu kann die Einrichtung beispielsweise eine elektronische Steuerung umfassen, die die Wiegeeinrichtung automatisch ansteuert, um das Gewicht des Elektrodenstrangs zu bestimmen und einen entsprechenden Messwert zu erzeugen, der gegebenenfalls aufgezeichnet wird.

Ferner ist es bevorzugt, dass die Einrichtung eine elektronische Speichereinrichtung umfasst und dazu ausgebildet ist, das Gewicht des Elektrodenstrangs automatisch in der elektronischen Speichereinrichtung aufzuzeichnen, um so eine umfassende Auswertung und Analyse der den Elektrodenmaterialverbrauch betreffenden Daten zu ermöglichen.
Gemäß einer weiteren bevorzugten Ausführungsform der vorliegenden Erfindung ist die Wiegeeinrichtung in einer Transporteinrichtung integriert, die dazu ausgebildet ist, den in dem Elektrolichtbogenofen angeordneten und durch eine Halteeinrichtung gehaltene Elektrodenstrang aufzunehmen und in dem Elektrolichtbogenofen zu transportieren und/oder aus dem Elektrolichtbogenofen heraus zu transportieren, und/oder dazu, einen außerhalb des Elektrolichtbogenofens angeordneten Elektrodenstrang in den Elektrolichtbogenofen zu transportieren. Wie vorstehend in Bezug auf das erfindungsgemäße Verfahren näher beschrieben, umfasst die Transporteinrichtung vorzugsweise eine Kraneinrichtung, wobei die Wiegeeinrichtung eine an der Kraneinrichtung angebrachte Kranwaage aufweisen kann.
Gemäß einer weiteren vorteilhaften Ausführungsform der vorliegenden Erfindung ist die Wiegeeinrichtung in einer Halteeinrichtung integriert, die dazu ausgebildet ist, den Elektrodenstrang während des Schmelzbetriebs des Elektrolichtbogenofens zu halten. Bevorzugt ist die Wiegeeinrichtung, wie vorstehend in Bezug auf das erfindungsgemäße Verfahren beschrieben, in einem Tragarm der Halteeinrichtung integriert. Zudem kann die Wiegeeinrichtung auch in einer wie vorstehend in Bezug auf das Verfahren beschriebenen Verstelleinrichtung, insbesondere in einem Hydrauliksystem, zur Verstellung der Halteeinrichtung integriert sein.
Die Wiegeeinrichtung umfasst vorzugsweise wenigstens ein Element, welches bevorzugt ein Dehnungsmessstreifen, ein Kraftaufnehmer und/oder ein in einem Hydrauliksystem zur Verstellung der Halteeinrichtung für den Elektrodenstrang angeordnetes Druckmesselement ist. Dabei kann der wenigstens eine Dehnungsmessstreifen z.B. ein metallischer Dehnungsmessstreifen oder ein optischer Dehnungsmessstreifen sein und/oder der wenigstens eine Kraftaufnehmer kann eine Wägezelle sein.
Die Wiegeeinrichtung der Einrichtung ist so ausgestaltet, dass diese das Gewicht des wenigstens einen Elektrodenstrangs kontinuierlich oder zumindest quasikontinuierlich, mit einer zeitlichen Auflösung von 1 bis 500 Hz, bestimmt.
Nachfolgend wird die vorliegende Erfindung beispielhaft anhand vorteilhafter Ausführungsformen unter Bezugnahme auf die beigefügten Figuren beschrieben. Es zeigen:
- Fig. 1: eine Anlage mit einem Elektrolichtbogenofen und einer Einrichtung zur Bestimmung des Verbrauchs an Elektrodenmaterial des Elektrolichtbogenofens gemäß eines Ausführungsbeispiels der vorliegenden Erfindung und
- Fig. 2: eine Einrichtung zur Bestimmung des Verbrauchs an Elektrodenmaterial eines Elektrolichtbogenofens gemäß eines weiteren Ausführungsbeispiels der vorliegenden Erfindung.

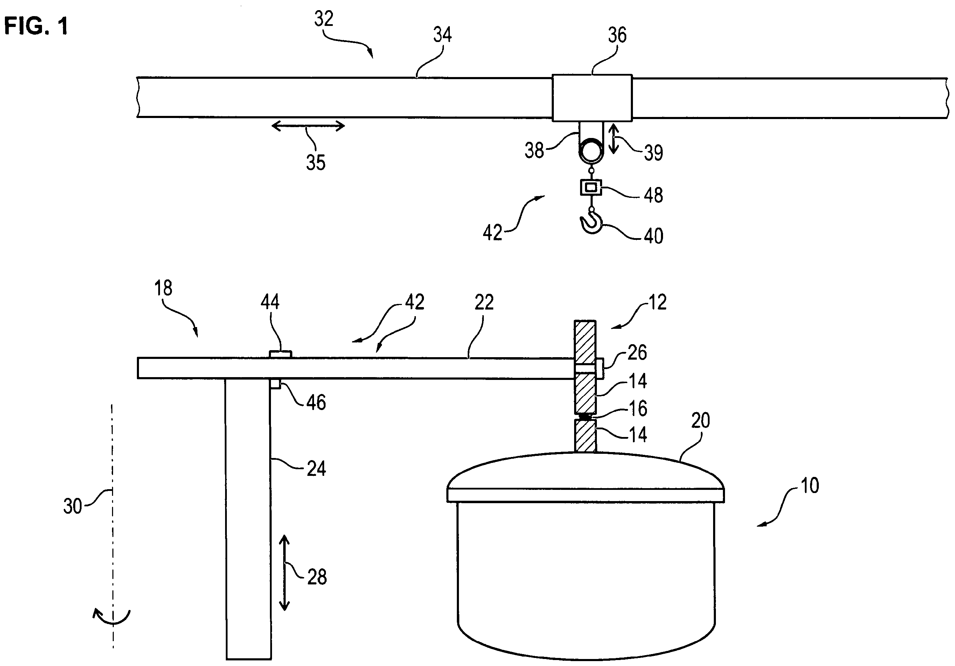

Die Fig. 1 zeigt eine Anlage mit einem elektrischen Lichtbogenofen 10, der als Einsatzgut beispielsweise Stahlschrott und gegebenenfalls weitere Zusatzstoffe aufnimmt, welches in dem Lichtbogenofen 10 durch die Wärmeenergie von in dem Lichtbogenofen 10 erzeugten Lichtbögen aufgeschmolzen wird.
Zur Erzeugung der Lichtbögen weist die Anlage eine in dem Lichtbogenofen 10 angeordnete, in der Fig. 1 nicht gezeigte Bodenelektrode auf, die mit dem Einsatzgut des Lichtbogenofens 10 in direktem elektrischen Kontakt steht, sowie einen Elektrodenstrang 12, der aus mehreren länglichen Graphitelektroden 14 zusammengesetzt ist, die an ihren längsseitigen Enden jeweils über einen Gewindenippel 16 miteinander verschraubt sind. In der Praxis können mehrere, insbesondere drei parallele angeordnete Elektrodenstränge 12, insbesondere unter Verzicht auf die Bodenelektrode, verwendet werden, wobei in der Fig. 1 zur besseren Übersichtlichkeit nur ein Elektrodenstrang 12 dargestellt ist.

Die Anlage umfasst ferner eine Halteeinrichtung 18, an der der Elektrodenstrang 12 aufgehängt ist und ausgehend von der sich der Elektrodenstrang 12 von oben her in im Wesentlichen senkrechter Richtung durch ein Loch des Ofendeckels 20 in den Lichtbogenofen 10 hinein erstreckt. Die Halteeinrichtung 18 umfasst einen im Wesentlichen horizontalen Tragarm 22, der von einer im Wesentlichen senkrechten Säule 24 getragen wird. An dem ofenseitigen Ende des Tragarms 22 weist dieser eine Halterung 26 auf, in der der Elektrodenstrang 12 aufgenommen ist und die beispielsweise eine oder mehrere Klemmbacken umfassen kann, mittels derer der Elektrodenstrang 12 in der Halterung 26 fixiert oder von der Halterung 26 gelöst werden kann.

Der Elektrodenstrang 12 wird durch die Halteeinrichtung 18 in einer Position gehalten, in der sich die in dem Lichtbogenofen 10 angeordneten Spitze des Elektrodenstrangs 12 oberhalb des Einsatzgutes des Lichtbogenofens 10 in einem definierten Abstand von dem Einsatzgut befindet. Durch das Anlegen einer elektrischen Spannung zwischen der Bodenelektrode und dem Elektrodenstrang 12 lassen sich Lichtbögen zwischen dem Elektrodenstrang 12 und dem Einsatzgut des Lichtbogenofens 10 erzeugen und das Einsatzgut lässt sich durch die durch die Lichtbögen frei gesetzte Wärmeenergie aufschmelzen. Die Bestromung des Elektrodenstrangs 12 erfolgt über den Tragarm 22, der zu diesem Zweck aus einem elektrisch leitfähigen Material hergestellt ist und über in der Fig. 1 nicht dargestellte Kabel mit einer elektrischen Leistungsquelle verbunden ist.

Um die Höhe des Elektrodenstrangs 12 einstellen zu können und insbesondere eine infolge des Abbrandes des Elektrodenstrangs 12 während des Schmelzbetriebes des Lichtbogenofens 10 notwendige Nachführung des Elektrodenstrangs 12 zu ermöglichen, ist die Halteeinrichtung 18 höhenverstellbar, d.h. in Richtung des Pfeils 28 beweglich, ausgebildet. Ferner ist die Halteeinrichtung 18 gemeinsam mit dem Elektrodenstrang 12 und bevorzugt gemeinsam mit dem Ofendeckel 20 relativ zu dem Lichtbogenofen 10 anhebbar und um eine vertikale Achse 30 verschwenkbar ausgebildet, um den Lichtbogenofen 10 beispielsweise nach einem erfolgten Abstich öffnen und eine Chargierung des Lichtbogenofens 10 mit neuem Einsatzgut durch die dem Ofendeckel 20 zugeordnete Öffnung des Lichtbogenofens 10 vornehmen zu können.

Die Anlage umfasst ferner eine Transporteinrichtung 32, die als eine Kraneinrichtung mit einer im Wesentlichen horizontalen Kranbahn 34, einer auf der Kranbahn 34 in Richtung des Pfeils 35 verfahrbaren Laufkatze 36 und einem an der Laufkatze 36 mit einem Seil 38 aufgehängten und relativ zu der Laufkatze 36 in vertikaler Richtung entlang des Pfeils 39 anheb- und absenkbaren Kranhaken 40 ausgebildet ist. Die Positionen und Bewegungsbahnen der Transporteinrichtung 32 und der Halteeinrichtung 18 sind so abgestimmt, dass die Laufkatze 36 in eine Position vertikal oberhalb der Position der Halterung 26 der Halteeinrichtung 18 bewegbar ist, in welcher der in der Halterung 26 aufgenommene Elektrodenstrang 12 an die Transporteinrichtung 32 angehängt oder von ihr abgehängt werden kann. Zu diesem Zweck kann der Elektrodenstrang 12 eine in der Fig. 1 nicht eigens dargestellte Schlaufe aufweisen oder die Transporteinrichtung 32 eine geeignete Kopplungsvorrichtung zum Anhängen des Elektrodenstrangs 12 aufweisen. Mit der Transporteinrichtung 32 können neue Elektroden 14 zu dem Elektrodenstrang 12 transportiert und mit diesem verbunden werden und der Elektrodenstrang 12 kann gegebenenfalls von der Halteeinrichtung 18 entfernt oder der Halteeinrichtung 18 zugeführt werden.

Die Anlage umfasst ferner eine Wiegeeinrichtung 42, die im vorliegenden Ausführungsbeispiel einen an der Oberseite des Tragarms 22 angebrachten Dehnungsmessstreifen 44 umfasst, der eine in dem Tragarm 22 durch das Gewicht des Elektrodenstrangs 12 bewirkte Dehnung misst, sowie eine im Bereich der Verbindung zwischen Tragarm 22 und Säule 24 angebrachte, mit dem Tragarm 22 und der Säule 24 messwirksam verbundene Wägezelle 46 und eine an der Laufkatze 36 der Transporteinrichtung 32 angehängte, zwischen der Laufkatze 36 und dem Kranhaken 40 angeordnete Kranwaage 48 umfasst.

Der Dehnungsmessstreifen 44 und die Wägezelle 46 dienen jeweils dazu, das Gewicht des Elektrodenstrangs 12 zu messen, während dieser von der Halteeinrichtung 18 gehalten wird, zum Beispiel zwischen zwei aufeinander folgenden Schmelzbetriebsintervallen des Lichtbogenofens 10. Hingegen dient die Kranwaage 48 dazu, das Gewicht des Elektrodenstrangs 12 zu messen, während dieser an der Transporteinrichtung 32 hängt, beispielsweise während der Elektrodenstrang 12 durch die Transporteinrichtung 32 relativ zu dem Lichtbogenofen 10 und der Halteeinrichtung 18 abgesenkt wird, z.B. nachdem eine neue Elektrode 14 an den Elektrodenstrang 12 angenippelt wurde.

Die durch die Wiegeeinrichtung 42 durchgeführte Bestimmung des Gewichts des Elektrodenstrangs 12 ermöglicht die exakte Ermittlung des Verbrauchs an Elektrodenmaterial des Lichtbogenofens 10, wobei die Verbrauchsbestimmung derart in den Betrieb des Lichtbogenofens 10 integriert ist, dass sie mit minimalem zusätzlichen Aufwand durchführbar ist. In der Praxis kann die Wiegeeinrichtung 42 natürlich auch nur zwei oder eine der in Fig. 1 dargestellten verschiedenen Komponenten Dehnungsmessstreifen 44, Wägezelle 46 und Kranwaage 48 umfassen.

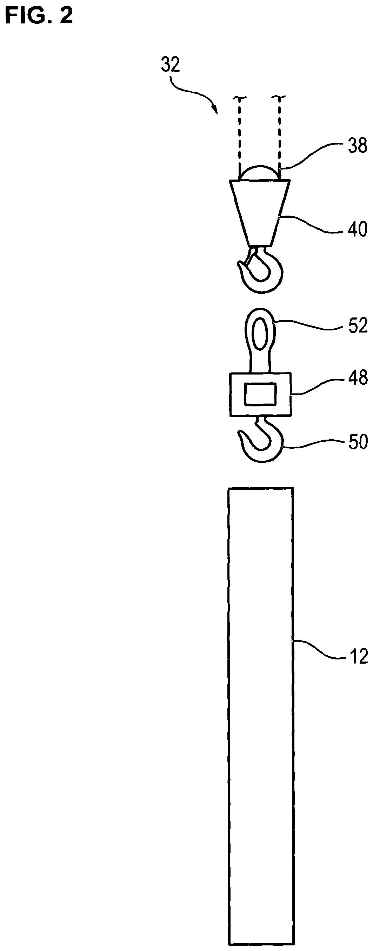

Fig. 2 zeigt eine Detaildarstellung einer Einrichtung zur Bestimmung des Verbrauchs an Elektrodenmaterial eines Elektroofens gemäß einer weiteren Ausführungsform, welche eine Kranwaage 48 umfasst, die an ihrem einen Ende einen Haken 50 zur Kopplung mit dem Elektrodenstrang 12 aufweist, und die an ihrem anderen Ende eine Öse 52 zum Anhängen der Kranwaage 48 an einen Kranhaken 40 einer z.B. wie in der Fig. 1 gezeigt ausgestalteten Transporteinrichtung 32 aufweist.

### Bezugszeichenliste

- 10: Elektrolichtbogenofen
- 12: Elektrodenstrang
- 14: (Graphit)elektrode
- 16: Gewindenippel
- 18: Halteeinrichtung
- 20: Ofendeckel
- 22: Tragarm
- 24: Säule
- 26: Halterung
- 28: Pfeil
- 30: vertikale Achse
- 32: Transporteinrichtung
- 34: Kranbahn
- 35: Pfeil
- 36: Laufkatze
- 38: Seil
- 39: Pfeil
- 40: Kranhaken
- 42: Wiegeeinrichtung
- 44: Dehnungsmessstreifen
- 46: Wägezelle
- 48: Kranwaage
- 50: Haken
- 52: Öse

## Patentansprüche

1. Verfahren zur Bestimmung des Verbrauchs an Elektrodenmaterial beim Betrieb eines Elektrolichtbogenofens (10) zur Erzeugung von Stahl, wobei das Verfahren umfasst, dass
das Gewicht wenigstens eines in dem Elektrolichtbogenofen (10) angeordneten oder in diesen einzuführenden Elektrodenstrangs (12) mit wenigstens einer Wiegeeinrichtung (42) zu wenigstens zwei verschiedenen Zeitpunkten bestimmt wird und die Wiegeeinrichtung (42) so ausgestaltet ist, dass diese das Gewicht des wenigstens einen Elektrodenstrangs (12) kontinuierlich oder zumindest quasikontinuierlich mit einer zeitlichen Auflösung von 1 bis 500 Hz, bestimmt.

2. Verfahren nach Anspruch 1,
**dadurch gekennzeichnet, dass**
das Gewicht des wenigstens einen Elektrodenstrangs (12) automatisch bestimmt wird.

3. Verfahren nach Anspruch 2, **dadurch gekennzeichnet, dass**
das Gewicht des wenigstens einen Elektrodenstrangs (12) vor und nach einem Schmelzbetriebsintervall des Elektrolichtbogenofens (10) bestimmt wird.

4. Verfahren nach zumindest einem der vorhergehenden Ansprüche,
**dadurch gekennzeichnet, dass**
die Bestimmung des Gewichts durch eine in einer Betriebseinrichtung (18, 32) einer den Elektrolichtbogenofen (10) umfassenden Anlage integrierten Wiegeeinrichtung (42) erfolgt, wobei die Wiegeeinrichtung (42) in einer Transporteinrichtung (32) integriert ist, mit welcher der Elektrodenstrang (12) aufgenommen und in dem Elektrolichtbogenofen (10) transportiert und/oder aus dem Elektrolichtbogenofen (10) heraus transportiert wird, und/oder mit welcher ein außerhalb des Elektrolichtbogenofens (10) angeordneter Elektrodenstrang (12) in den Elektrolichtbogenofen (10) transportiert wird, und/oder die Wiegeeinrichtung (42) in einer Halteeinrichtung (18) integriert ist, durch welche der Elektrodenstrang (12) während des Betriebs des Elektrolichtbogenofens (10) in Position gehalten wird, in einer Verstelleinrichtung der Halteeinrichtung (18), mit der die Halteeinrichtung (18) verstellbar ist.

5. Verfahren nach zumindest einem der vorhergehenden Ansprüche,
**dadurch gekennzeichnet, dass**
das Gewicht des wenigstens einen Elektrodenstrangs (12) unter Verwendung wenigstens eines Dehnungsmessstreifens (44), wenigstens eines Kraftaufnehmers und/oder wenigstens eines in einem Hydrauliksystem zur Verstellung einer Halteeinrichtung (18) für den Elektrodenstrang (12) angeordneten Druckmesselements und eines metallischen Dehnungsmessstreifens oder eines optischen Dehnungsmessstreifens bestimmt wird.

6. Einrichtung zur Bestimmung des Verbrauchs an Elektrodenmaterial eines Elektrolichtbogenofens (10) zur Erzeugung von Stahl, wobei die Einrichtung wenigstens eine Wiegeeinrichtung (42) zum Bestimmen des Gewichts zu wenigstens zwei verschiedenen Zeitpunkten wenigstens eines in dem Elektrolichtbogenofen (10) angeordneten oder in diesen einzuführenden Elektrodenstrangs (12) umfasst, wobei die Wiegeeinrichtung (42) in einer Betriebseinrichtung (18, 32) einer den Elektrolichtbogenofen (10) umfassenden Anlage integriert ist und die Wiegeeinrichtung (42) so ausgestaltet ist, dass diese das Gewicht des wenigstens einen Elektrodenstrangs (12) kontinuierlich oder zumindest quasikontinuierlich mit einer zeitlichen Auflösung von 1 bis 500 Hz bestimmt.

7. Einrichtung nach Anspruch 6,
**dadurch gekennzeichnet, dass**
dass diese dazu ausgebildet ist, das Gewicht des Elektrodenstrangs (12) automatisch zu bestimmen.

8. Einrichtung nach zumindest einem der Ansprüche 6 oder 7,
**dadurch gekennzeichnet, dass**
dass die Wiegeeinrichtung (42) in einer Transporteinrichtung (32) integriert ist, die dazu ausgebildet ist, den in dem Elektrolichtbogenofen (10) angeordneten und vorzugsweise in dem Elektrolichtbogenofen (10) durch eine Halteeinrichtung (18) gehaltene Elektrodenstrang (12) aufzunehmen und in dem Elektrolichtbogenofen (10) zu transportieren und/oder aus dem Elektrolichtbogenofen (10) heraus zu transportieren, und/oder dazu, einen außerhalb des Elektrolichtbogenofens (10) angeordneten Elektrodenstrang (12) in den Elektrolichtbogenofen (10) zu transportieren.

9. Einrichtung nach zumindest einem der Ansprüche 6, **dadurch gekennzeichnet, dass**
die Wiegeeinrichtung (42) in einer Halteeinrichtung (18) integriert ist, die dazu ausgebildet ist, den Elektrodenstrang (12) während des Schmelzbetriebs des Elektrolichtbogenofens (10) zu halten.

10. Einrichtung nach Anspruch 9,
**dadurch gekennzeichnet, dass**
die Wiegeeinrichtung (42) in einem Tragarm (22) der Halteeinrichtung (18) integriert ist.

11. Einrichtung nach zumindest einem der Ansprüche 6 bis 10,
**dadurch gekennzeichnet, dass**
die Wiegeeinrichtung (42) wenigstens einen Dehnungsmessstreifen (44), wenigstens einen Kraftaufnehmer und/oder wenigstens ein in einem Hydrauliksystem zur Verstellung einer Halteeinrichtung (18) für den Elektrodenstrang (12) angeordnetes Druckmesselement und einen metallischen Dehnungsmessstreifen oder einen optischen Dehnungsmessstreifen umfasst.

## Claims

1. A method for determining consumption of electrode material during an operation of an electric arc furnace (10) for producing steel, the method comprising that the weight of at least one electrode column (12) disposed inside the electric arc furnace (10) or is to be introduced into the electric arc furnace (10), by at least one weighing device (42) at at least two different points in time und that the weighing device (42) is configured such that said weigning device 42) determines the weight of the at least one electrode column (12) continuously or at least quasi-continuously with a temporal resolution of from 1 to 500 Hz.

2. The method according to claim 1, **characterized in that** the weight of the at least one electrode column (12) is determined automatically.

3. The method according to claim 2, **characterized in that** the weight of the at least one electrode column (12) is determined before and after a melt operation interval of the electric arc furnace (10).

4. The method according to at least one of the preceding claims, **characterized in that** the weight is determined by a weighing device integrated in an operating device (18, 32) of a system containing the electric arc furnace (10), the weighing device (42) being integrated in a transport device (32) with which the electrode column (12) disposed inside the electric arc furnace (10) and held in the electric arc furnace (10) by a holding device (18) is received and transported in the electric arc furnace (10) and/or transported out of the electric arc furnace (10), and/or with the electrode column disposed outside of the electric arc furnace (10) is transported into the electric arc furnace (10), and/or the weighing device is integrated in the holding device (18) by which the electrode column (12) is held in position during the operation of the electric arc furnace (10), in an adjusting device of the holding device (18), with which the holding device is adjustable.

5. The method according to at least one of the preceding claims, **characterized in that** the weight of the at least one electrode column (12) is determined using at least one strain gauge (44), at least one force transducer and/or at least one pressure measuring element disposed in a hydraulic system for adjusting a holding device (18) for the electrode column (12) and a metallic strain gauge or an optical strain gauge.

6. A device for determining consumption of electrode material during an operation of an electric arc furnace (10) for producing steel, wherein the device comprises at least one weighing device (42) for determining the weight at at least two different points in time of at least one electrode column (12) disposed in the electric arc furnace (10) or an electrode column (12) to be introduced into the electric arc furnace (10), wherein the weighing device (42) is configured such that said weighing device (42) determines the weight of the at least one electrode column (12) continuously or at least quasi-continuously with a temporal resolution of from 1 to 500 Hz.

7. The device according to claim 6, **characterized in that** the weight of the electrode column (12) is determined automatically.

8. The device according to at least one of claims 6 or 7, **characterized in that** the weighing device (42) is integrated in a transport device (32), which is configured to receive the electrode column (12) that is disposed inside the electric arc furnace (10) and preferably held in the electric arc furnace (10) by a holding device (18) and to transport the electrode column (12) inside the electric arc furnace (10) and/or transport the electrode column (12) out of the electric arc furnace (10) and/or transport the electrode column (12) disposed outside of the electric arc furnace (10) into the electrode column (12) .

9. The device according to claim 6, **characterized in that** the weighing device (42) is integrated in a holding device (18) which is configured to hold the electrode column (12) during a melt operation of the electric arc furnace (10).

10. The device according to claim 9, **characterized in that** the weighing device (42) is integrated in a support arm (22) of the holding device (18) .

11. The device according to at least one of claims 6 to 10, **characterized in that** the weighing device (42) at least one strain gauge (44), at least one force transducer and/or at least one pressure measuring element disposed in a hydraulic system for adjusting a holding device (18) for the electrode column (12) and a metallic strain gauge or an optical strain gauge.

## Revendications

1. Procédé, destiné à déterminer la consommation de matière d'électrode lors du fonctionnement d'un four à arc électrique (10) pour produire de l'acier, le procédé comprenant que le poids d'au moins une chaîne d'électrodes (12) placée dans le four à arc électrique (10) ou devant être introduite dans celui-ci soit déterminé à au moins deux moments différents, à l'aide d'au moins système de pesée (42) et le système de pesée (42) étant conçu de sorte à déterminer en continuité ou au moins en quasi-continuité le poids d'au moins une chaîne d'électrodes (12) avec un résolution temporelle de 1 à 500 Hz.

2. Procédé selon la revendication 1, **caractérisé en ce que** le poids de l'au moins une chaîne d'électrodes (12) est automatiquement déterminée.

3. Procédé selon la revendication 2, **caractérisé en ce que** le poids de l'au moins une chaîne d'électrodes (12) est déterminée avant ou après un intervalle de mode fusion du four à arc électrique (10).

4. Procédé selon au moins l'une quelconque des revendications précédentes, **caractérisé en ce que** la détermination du poids s'effectue à l'aide d'un système de pesée (42) intégré dans un système fonctionnel (18, 32) d'une installation comprenant le four à arc électrique (10), le système de pesée (42) étant intégré dans un système de transport (32) par lequel la chaîne d'électrodes (12) est prise en charge et transportée dans le four à arc électrique (10) et/ou transportée hors du four à arc électrique et/ou à l'aide duquel une chaîne d'électrodes (12) placée à l'extérieur du four à arc électrique (10) est transportée dans le four à arc électrique (10),
et/ou le système de pesée (42) étant intégré dans un système de maintien (13) par lequel, pendant le fonctionnement du four à arc électrique (10), la chaîne d'électrodes (12) est maintenue en position dans un système d'ajustage du système de maintien (18), par lequel le système de maintien (18) est ajustable.

5. Procédé selon au moins l'une quel conque des revendications précédentes, **caractérisé en ce que** le poids de l'au moins une chaîne d'électrodes (12) est déterminée en utilisant au moins une jauge extensométrique (44), au moins un capteur de force et/ou au moins un élément de mesure de pression placé dans un système hydraulique pour l'ajustage d'un système de maintien (18) pour la chaîne d'électrodes (12) et une jauge extensométrique métallique ou une jauge extensométrique optique.

6. Installation destinée à déterminer la consommation en matière d'électrode d'un four à arc électrique pour produire de l'acier,
l'installation comprenant au moins un système de pesée (42), destiné à déterminer le poids à au moins deux moments différents d'au moins une chaîne d'électrodes (12) placée dans le four à arc électrique (10) ou devant être introduite dans celui-ci, le système de pesée (42) étant intégré dans un système fonctionnel (18, 32) d'une installation comprenant le four à arc électrique (10) et le système de pesée (42) étant conçu de sorte à déterminer en continuité ou au moins en cuasi-continuité le poids de l'au moins une chaîne d'électrodes (12) avec une résolution temporelle de 1 à 500 Hz.

7. Installation selon la revendication 6, **caractérisée en ce qu'**elle est conçue pour déterminer automatiquement le poids de la chaîne d'électrodes (12).

8. Installation selon au moins l'une quelconque des revendications 6 ou 7, **caractérisée en ce que** le système de pesée (42) est intégré dans un système de transport (32) qui est conçu pour prendre en charge la chaîne d'électrodes (12) placée dans le four à arc électrique (10) et maintenue de préférence dans le four à arc électrique (10) par un système de maintien (18) et pour la transporter dans le four à arc électrique (10) et/ou pour la transporter hors du four à arc électrique (10) et/ou pour transporter une chaîne d'électrodes (12) placée à l'extérieur du four à arc électrique (10) et la transporter dans four à arc électrique (10).

9. Installation selon la revendication 6, **caractérisée en ce que** le système de posée (42) est intégré dans un système de maintien (18) qui est conçu pour maintenir la chaîne d'électrodes (12) pendant le mode fusion du four à arc électrique (10) .

10. Installation selon la revendication 9, **caractérisée en ce que** le système de pesée (42) est intégré dans un bras de support (22) du système de maintien (18).

11. Installation selon au moins l'une quelconque des revendications 6 à 10, **caractérisée en ce que** le système de pesée (42) comprend au moins une jauge extensométrique (44), au moins un capteur de force et/ou au moins un élément de mesure de pression placé dans un système hydraulique destiné à l'ajustage du système de maintien (18) pour la chaîne d'électrodes (12) et une jauge extensemétrique métallique ou une jauge extensométrique optique.
